# FASCICULE DE BREVET EUROPEEN

(11) **EP 0 624 758 B1**
(45) Date de publication et mention de la délivrance du brevet: **21.08.1996**
(21) Numéro de dépôt: 94400999.2
(22) Date de dépôt: 06.05.1994
(51) Int. Cl.: F24C 7/06, A21B 3/04, A47J 27/04

(54) **Four de cuisson vapeur à dispositif de suppression des gouttes d'eau**
Dampfofen mit Vorrichtung zur Verminderung von Wassertropfen
Steam oven with a system for preventing water droplets

(30) Priorité: 11.05.1993 FR 9305639
(43) Date de publication de la demande: 17.11.1994
(73) Titulaire: COMPAGNIE EUROPEENNE POUR L'EQUIPEMENT MENAGER "CEPEM", F-45140 St Jean-de-la-Ruelle (FR)
(72) Inventeur: Chevrier, Jean-Paul, F-92402 Courbevoie Cédex (FR); Baratin, Nicole, F-92402 Courbevoie Cédex (FR)
(74) Mandataire: Benoit, Monique

(56) Documents cités:
- DE-A- 3 302 794
- FR-A- 2 635 171

## Description

La présente invention a pour objet un four de cuisson vapeur équipé d'un dispositif de suppression du condensat sur les parois internes du four.

Le mode de fonctionnement des fours de cuisson vapeur consiste à générer, dans la cavité du four, de la vapeur à pression atmosphérique, de manière à faire monter la température à l'intérieur de la cavité et permettre la cuisson des aliments par l'intermédiaire de la vapeur (voir le document FR-A-2 635 171).

Pour ce type de cuisson, et plus particulièrement pour les cuissons en vapeur saturée, les parois internes de la cavité sont recouvertes de gouttes d'eau ou condensat, qui persistent même après l'ouverture de la porte du four en fin de cuisson.

Les fours actuellement disponibles sur le marché ne traitant pas ce problème de condensat, il est nécessaire de nettoyer les parois du four après chaque utilisation pour éviter tout risque de moisissures dans la cavité du four.

La présente invention a pour objectif de pallier l'inconvénient ci-dessus en proposant un four de cuisson vapeur équipé d'un dispositif capable de supprimer, avant la fin de la cuisson, les gouttes d'eau formées sur les parois internes de la cavité.

Plus précisément, l'invention a pour objet un four de cuisson vapeur, caractérisé en ce qu'il comporte un dispositif effectuant le chauffage des parois internes du four pendant que celui-ci fonctionne, de manière à amener les parois à une température telle que les gouttes d'eau générées par la vapeur sur ces parois soient supprimées.

Les études de la Demanderesse ont montré qu'une élimination satisfaisante des gouttes d'eau sur les parois internes d'un four de cuisson vapeur était obtenue en chauffant ces parois à une température d'environ 120° Celsius, plus ou moins 10° Celsius.

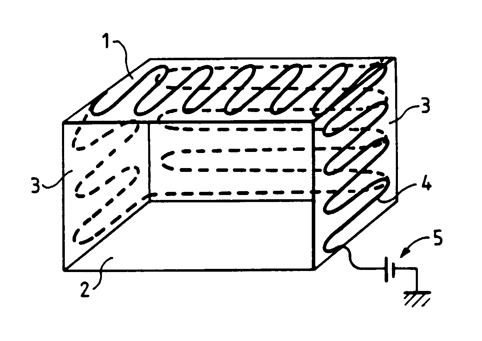

L'unique figure annexée illustre un exemple de réalisation d'un dispositif effectuant le chauffage des parois du four selon l'invention. Sur cette figure, on a représenté schématiquement la cavité d'un four constituée d'une paroi supérieure 1, d'une paroi inférieure 2 et de trois parois latérales 3.

Le dispositif selon l'invention est constitué dans cet exemple d'un fil électrique chauffant 4 disposé sur les parties externes des parois du four, et alimenté électriquement par tous moyens d'alimentation en tension 5. Le fil électrique 4 est fixé aux parois par tous moyens permettant un échange thermique optimal entre le fil et les parois. Les parois sont en matériau thermiquement conducteur, par exemple en acier inoxydable.

Le dispositif effectuant le chauffage des parois peut être mis en marche automatiquement soit simultanément avec le four, soit au bout d'un certain temps de cuisson déterminé en fonction de la durée totale de la cuisson et de l'élément chauffant utilisé.

Le four de cuisson vapeur équipé de son dispositif de chauffage des parois selon l'invention n'est pas limité à la forme de réalisation décrite précédemment.

D'autres dispositifs de chauffage peuvent en effet être envisagés sans sortir du cadre de l'invention. comme l'utilisation de plaques de polyester recouvertes d'un matériau conducteur et posées sur les parois que l'on désire chauffer.

## Revendications

1. Four de cuisson vapeur, caractérisé en ce qu'il comporte un dispositif (4, 5) effectuant le chauffage des parois internes du four pendant que celui-ci fonctionne, de manière à amener les parois à une température telle que les gouttes d'eau générées par la vapeur sur ces parois soient supprimées.

2. Four de cuisson vapeur selon la revendication 1, caractérisé en ce que le dispositif est constitué d'un fil électrique chauffant (4) placé sur la partie externe des parois, et de moyens (5) d'alimentation en tension dudit fil électrique.

3. Four de cuisson vapeur selon l'une quelconque des revendications précédentes, caractérisé en ce que ladite température est sensiblement supérieure ou égale à 110° Celsius.

4. Four de cuisson vapeur selon l'une quelconque des revendications précédentes, caractérisé en ce que le dispositif est déclenché automatiquement dès que le four fonctionne.

5. Four de cuisson selon l'une quelconque des revendications 1 à 3, caractérisé en ce que le dispositif est déclenché automatiquement au bout d'une durée de cuisson prédéterminée.

## Patentansprüche

1. Dampf-Backofen, dadurch gekennzeichnet, daß er eine Vorrichtung (4, 5) aufweist, die das Erwärmen der Innenwände des Ofens während seines Betriebs auf eine Weise bewirkt, daß die Wände auf eine solche Temperatur gebracht werden, daß die durch den Dampf auf diesen Wänden erzeugten Wassertropfen beseitigt werden.

2. Dampf-Backofen nach Anspruch 1, dadurch gekennzeichnet, daß die Vorrichtung aus einem elektrischen Heizfaden (4), der am Außenabschnitt der Wände plaziert ist, und aus Spannungsversorgungsmitteln (5) für den elektrischen Faden besteht.

3. Dampf-Backofen nach einem der vorhergehenden Ansprüche, dadurch gekennzeichnet, daß die Temperatur im wesentlichen über oder gleich 110°C liegt bzw. ist.

4. Dampf-Backofen nach einem der vorhergehenden Ansprüche, dadurch gekennzeichnet, daß die Vorrichtung ab Betrieb des Ofens automatisch ausgelöst wird.

5. Dampf-Backofen nach einem der Ansprüche 1 bis 3, dadurch gekennzeichnet, daß die Vorrichtung am Ende einer vorbestimmten Garzeit automatisch ausgelöst wird.

## Claims

1. Steam cooking oven, characterized in that it includes a device (4, 5) for heating the internal walls of the oven while the latter is operating so as to bring the walls to a temperature such that the water droplets generated by the steam on these walls are prevented.

2. Steam cooking oven according to Claim 1, characterized in that the device consists of a heating electrical wire (4) placed on the external part of the walls and of means (5) for supplying voltage to the said electrical wire.

3. Steam cooking oven according to any one of the preceding claims, characterized in that the said temperature is substantially greater than or equal to 110° Celsius.

4. Steam cooking oven according to any one of the preceding claims, characterized in that the device is automatically triggered as soon as the oven operates.

5. Cooking oven according to any one of Claims 1 to 3, characterized in that the device is automatically triggered after a predetermined cooking time.
